# EUROPÄISCHE PATENTSCHRIFT

(11) **EP 3 277 558 B1**
(45) Veröffentlichungstag und Bekanntmachung des Hinweises auf die Patenterteilung: **17.04.2019**
(21) Anmeldenummer: 16706196.9
(22) Anmeldetag: 25.02.2016
(51) Int. Cl.: B62D 5/04

(54) **KUGELGEWINDETRIEB UND DAMIT AUSGESTATTETE LENKUNG EINES KRAFTFAHRZEUGS**
BALL SCREW DRIVE AND MOTOR VEHICLE STEERING SYSTEM EQUIPPED WITH SAME
SYSTÈME VIS-ÉCROU À BILLES ET DIRECTION DE VÉHICULE AUTOMOBILE ÉQUIPÉE DE CE SYSTÈME

(30) Priorität: 31.03.2015 DE 102015104919
(43) Veröffentlichungstag der Anmeldung: 07.02.2018
(73) Patentinhaber: Robert Bosch Automotive Steering GmbH, 73527 Schwäbisch Gmünd (DE)
(72) Erfinder: HETZEL, Oliver, 73550 Waldstetten (DE); JÜSCHKE, Michael, 73565 Spraitbach (DE); BERNHARD, Werner, 73563 Mögglingen (DE)
(74) Vertreter: Bee, Joachim
(86) Internationale Anmeldenummer: PCT/EP2016/053916
(87) Internationale Veröffentlichungsnummer: WO 2016/155951

(56) Entgegenhaltungen:
- DE-A1-102008 000 213
- DE-A1-102008 049 701
- DE-A1-102009 002 127
- DE-A1-102010 029 266
- DE-A1-102012 110 081
- US-A1- 2012 237 146

## Beschreibung

Die Erfindung betrifft einen Kugelgewindetrieb und eine damit ausgestattete Lenkung eines Kraftfahrzeugs. Insbesondere betrifft die Erfindung einen Kugelgewindetrieb, der eine Gewindespindel enthält zur Umsetzung eines von einem Elektromotor erzeugten Hilfsdrehmomentes in eine translatorische Hilfskraft, welche auf eine Zahnstange in der Lenkung des Kraftfahrzeugs wirkt.

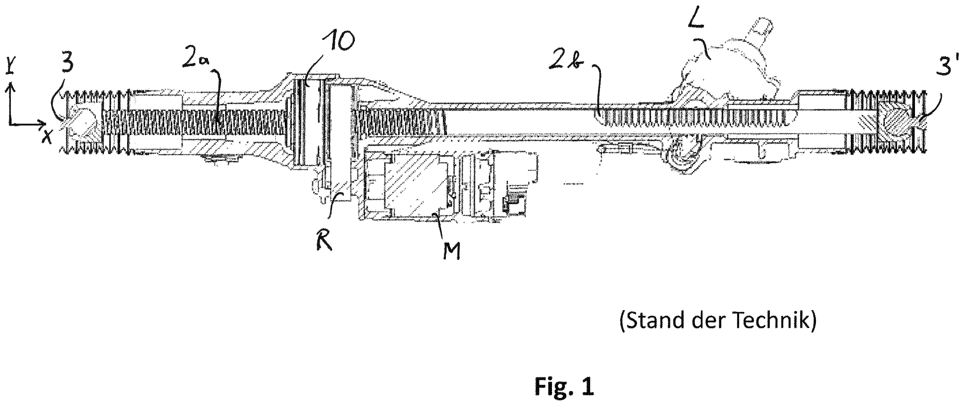

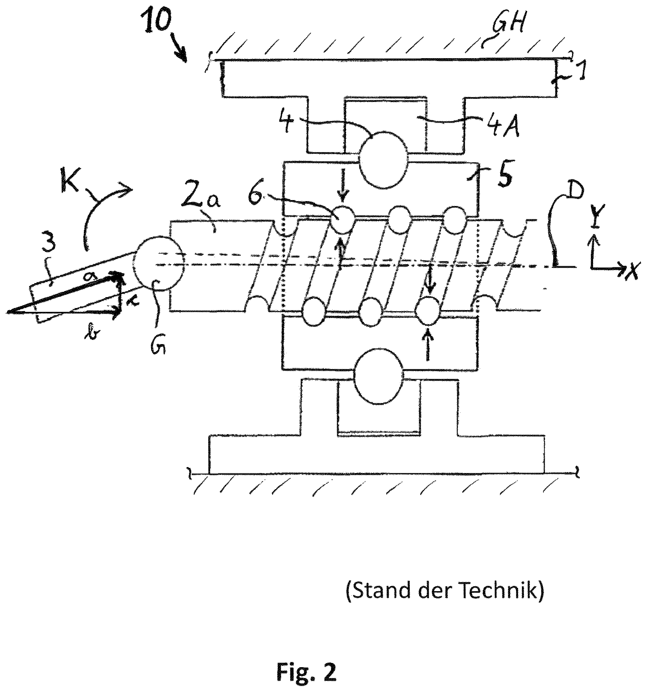

Auf dem Gebiet der Kraftfahrzeug-Lenkungen ist es hinlänglich bekannt, Kugelgewindetriebe einzusetzen, um eine von einem Hilfskraftmotor (Elektromotor) erzeugte rotatorische Hilfskraft (Drehmoment) in eine translatorische Hilfskraft umzusetzen, die auf eine Gewindespindel bzw. Zahnstange der Lenkung wirkt. In der Fig. 1 ist eine solche Konstruktion schematisch dargestellt. Wie dort zu sehen ist, wird über den Kugelgewindetrieb 10 die Gewindespindel 2a bzw. die Zahnstange 2b der Lenkung ausgelenkt, wobei das Ende der Gewindespindel 2a mittels eines Axialgelenks G mit einer Spurstange 3 verbunden ist; am Ende der Zahnstange 2b ist diese entsprechend gelenkig mit einer Spurstange 3' verbunden. Die Zahnstange 2b steht mit dem Ritzel eines Lenkgetriebes L im Eingriff. Der Kugelgewindetrieb 10 wird über einen Riemen R oder dergleichen von einem Elektromotor M angetrieben. In der Fig. 2 ist der Aufbau des Kugelgewindetriebes im Detail dargestellt: Der Kugelgewindetrieb 10 weist eine mittels eines Festlagers 4 in einem Gehäuse 1 gelagerte Kugelmutter 5 auf, die zusammen mit der Gewindespindel 2a und den umlaufenden Kugeln 6, den wesentlichen Teil des Kugelgewindetriebes bildet und die sich um die Drehachse D drehen kann. Beispielsweise ist ein solcher Kugelgewindetrieb aus der DE 10 2012 110 081 A1 bekannt. Diese Art von Kugelgewindetrieb wird häufig in elektrischen Hilfskraft-Lenkungen, sog. EPS-Lenkungen (Electric Power Steering), eingesetzt.

Die DE-A-10 2008 049 701 offenbart einen Kugelgewindetrieb mit den vorkennzeichnenden Merkmale des Anspruchs 1.

Des Weiteren ist bekannt, z.B. aus der DE 10 20010 029 266 A1, einen Kugelgewindetrieb der eingangs genannten Art dahingehend weiterzubilden, dass an jeder Stirnseite des Festlagers, insbesondere am Außenring des Festlagers (s. dort Fig. 2), mindestens ein Federelement "24" angeordnet wird. Hierdurch wird an dem Festlager eine Elastizität der Lagerung erreicht, wodurch in axialer Richtung wirkende stoßartige Belastungen effektiv gedämpft werden können.

In der Fig. 2 ist ein herkömmlicher Kugelgewindetrieb 10 dargestellt, bei dem sich im alltäglichen Einsatz das Problem stellt, dass insbesondere die Querkraftkomponente c der Spurstangenkraft a (erzeugt durch die gegebenen Winkel der jeweiligen Spurstangen 3 im Fahrzeug) eine große Herausforderung an die Baugruppe eines Kugelgewindetriebs in einer EPS-Lenkung darstellt. Ist die Lenkung nicht in der Lage, derart hohe Querkräfte aufzunehmen, kann es zu einer Schädigung des Kugelgewindetriebs (nachfolgend auch Kugelumlaufgewinde genannt) kommen, was u.a. zu einer signifikante Verschlechterung der akustischen Eigenschaften führt. Wie in der Fig. 2 anhand der grafischen Zerlegung der Spurstangen-Kraft a in die Komponenten b und c zu sehen ist, führt die Querkraftkomponente c der Spurstangenkraft a zu einer Radiallast, d.h. zu einer in Radialrichtung Y wirkenden Querbelastung des Kugelgewindetriebes 10. Diese Querbelastung bewirkt nicht nur, dass die Gewindespindel 2a und Zahnstange 2b sich elastisch verbiegen können, sondern dass sich ein entsprechendes Kippmoment K im Kugelgewindetrieb 10 ausbildet. Das Kippmoment K wiederum bewirkt eine besonders hohe Belastung der ersten Kugel 6 im Gewindetrieb und der letzen Kugel. Die wird in Fig. 2 durch die Pfeile angedeutet. Hohe Kippmomente stützen sich dort im vorderen bzw. hinteren Bereich des Kugelumlaufs ab und erzeugen eine hohe Hertzsche Pressung im Kontakt "Kugel-Laufbahn" bzw. "Kugel-Kugel", insbesondere in den äußeren Gewindegängen der Kugelmutter 5. Dies führt wiederum zu einer hohen Schädigung und Lebensdauer-Reduzierung, zur Deformationen in der Kugellaufbahn und/oder an der Kugel, wonach dann eine signifikante akustische Verschlechterung im Kugelgewindetrieb die Folge ist.

Die Erfindung geht also von einem herkömmlichen Kugelgewindetrieb aus, der eine Gewindespindel enthält zur Umsetzung eines von einem Elektromotor erzeugten Hilfsdrehmomentes in eine translatorische Hilfskraft, welche auf eine Zahnstange in einer Lenkung eines Kraftfahrzeugs wirkt, wobei ein Ende der Gewindespindel und ein Ende der Zahnstange jeweils mittels eines Axialgelenks mit einer Spurstange verbunden sind, wobei der Kugelgewindetrieb eine mittels eines Festlagers in einem Gehäuse gelagerte Kugelmutter (5) aufweist.

Aufgabe der vorliegenden Erfindung ist es, einen Kugelgewindetrieb der eingangs genannten Art deutlich zu verbessern, so dass die oben genannten Nachteile in vorteilhafter Weise überwunden werden. Insbesondere soll der Kugelgewindetrieb für den Einbau in Lenkungen so beschaffen sein, dass auch hohe Querbelastungen zu keiner hohen Belastung im Kugelumlauf des Kugelgewindetriebes führen.

Die Aufgabe wird gelöst durch einen Kugelgewindetrieb mit den Merkmalen des Anspruchs 1. Außerdem wir eine Lenkung vorgeschlagen, die mit einem solchen Kugelgewindetrieb ausgestattet ist.

Der erfindungsgemäße Kugelgewindetrieb zeichnet sich dadurch aus, dass zwischen dem mit der Spurstange verbundenen Ende der Gewindespindel und dem Kugelgewindetrieb ein Gleitlager-Element angeordnet ist, welches die Gewindespindel radial gegenüber dem Gehäuse abstützt.

Erfindungsgemäß ist das Gleitlager-Element als eine Hülse ausgebildet, welche die Gewindespindel umschließt, wobei die Hülse einen konisch geformten Abschnitt aufweist, der an seinem Außenumfang in Axialrichtung konisch geformt ist und an einer im Gehäuse konisch geformten Innenwandung anliegt. Dadurch lässt sich ein Gleitlager mit genau einstellbarem Radialspiel realisieren.

Somit wird zwischen dem Kugelgewindetrieb und der Ankopplung der Spurstange eine die Gewindespindel radial stützende Gleitlagerung vorgesehen, die auftretende Querkräfte abfangen kann, wodurch effektiv verhindert wird, dass zu hohe Querbelastungen direkt auf den Kugelumlauf einwirken können. Durch Einstellen des Radialspiels kommt der radiale Stützeffekt nur dann zum Tragen, wenn die Querbelastung eine gewisse Größe überschreiten sollte. Somit beliebt der Normalbetrieb der Lenkung völlig unbeeinflusst.

Im Falle hoher Querbelastungen werden die auftretenden Kippmomente limitiert, so dass die Materialbelastung der Bauteile (Kugelmutter, Kugeln) wie auch Durchbiegung der Gewindespindel bzw. Zahnstange deutlich begrenzt wird. Hierdurch ist es möglich, kleinere Gewindespindel oder Zahnstangen-Durchmesser zu verwenden und auch weniger Gewindegänge im Kugelumlauf vorzusehen, ohne die zulässigen Festigkeiten zu überschreiten. Dadurch kann die Konstruktion der Lenkung sehr kostengünstig realisiert werden. Zudem wird die gesamte Kugelkette weniger belastet, wodurch die Robustheit hinsichtlich der Betriebseigenschaften deutlich steigt.

Die Erfindung betrifft auf eine Lenkung für ein Kraftfahrzeug, die mit einem solchen Kugelgewindetrieb ausgestattet ist, und betrifft auch ein Gleitlager-Element an sich, das für den Aufbau eines solchen Kugelgewindetriebes geeignet ist. Hierzu wird auch auf die nebengeordneten Ansprüche verwiesen.

Die oben genannte Vorteile sowie weitere Vorteile ergeben sich auch aus Unteransprüchen, welche vorteilhafte Ausgestaltungen der Erfindung angeben.

Demnach ist es vorteilhaft, wenn das Gleitlager-Element, als Hülse mit einem ringförmigen Abschnitt ausgebildet ist, der ein Außengewinde aufweist, welches mit einem in dem Gehäuse ausgebildeten Innengewinde in Eingriff steht. Hierdurch lässt sich die Einbauposition der Hülse und somit auch die Verklemmung des konischen Abschnittes definiert bestimmen. Somit kann das Radialspiel sehr genau über das Außengewinde eingestellt werden.

In diesem Zusammenhang weist das Gleitlager-Element, insbesondere das als Hülse ausgebildete Gleitlager-Element, vorzugsweise eine glatte Innenwandung auf, an welcher der äußere Umfang der Gewindespindel mit einstellbarem Radialspiel anliegt. Dabei wird das Radialspiel eingestellt durch die Montage des als Hülse ausgebildeten Gleitlager-Elements innerhalb des Gehäuses, insbesondere durch eine mittels des Außengewindes eingestellte Position des konisch geformten Abschnitts gegenüber der konisch geformten Innenwandung. Vorzugsweise weist der konisch geformte Abschnitt mehrere in Axialrichtung verlaufende Schlitze auf, die diesen Abschnitt in mehrere Segmente unterteilen. Hierdurch erhält der konische Abschnitt eine gewisse Elastizität, welche das genaue Einstellen des Radialspiels noch weiter erleichtert und verbessert. Mit der Länge der Schlitze kann die Elastizität des konischen Abschnittes bestimmt bzw. angepasst werden.

Vorteilhafter Weise wird das Radialspiel so eingestellt, dass das Gleitlager-Element, insbesondere die Hülse, die Gewindespindel erst ab einer definierten Querbelastung radial gegenüber dem Gehäuse abstützt, insbesondere ab einer Querbelastung, die auftrifft, wenn die Querkraftkomponente mehr als 10%, insbesondere als 20%, der Spurstangen-Kraft beträgt. Das Gleitlager wirkt also ab einer gewissen Querbelastung als zusätzliches Loslager. Mit der ersten Einstellung (> 10%) können bereits geringerer Querbelastungen von dem Gleitlager radial abgestützt werden. Mit der zweiten Einstellung (> 20%) wirkt die radiale Abstützung erst bei besonders hohen Querbelastungen, welche z.B. bei Sonderereignissen bzw. bei Missbrauch auftreten.

Vorzugsweise ist der konisch geformte Abschnitt so dimensioniert, dass er eine Steigung zwischen 1 und 1,5 aufweist. Das Gleitlager-Element bzw. die Hülse ist vorzugsweis aus Metall, insbesondere Stahl oder Aluminium, oder aus Kunststoff, insbesondere einem Polyamid, gefertigt.

Nachfolgend wird die Erfindung anhand von Ausführungsbeispielen, die sich auf eine Lenkung für ein Kraftfahrzeug beziehen, im Detail und unter Bezugnahme auf die beiliegenden Zeichnungen Fig. 3, 4 und 5a/b beschrieben, die folgende schematische Darstellungen wiedergeben:
- Fig. 3: zeigt im Querschnitt den Aufbau einer Lenkung, die mit einem erfindungsgemäßen Kugelgewindetrieb ausgestattet ist;
- Fig. 4: zeigt näher im Detail den Einbau eines Gleitlager-Elementes in Form einer Hülse innerhalb der Lenkung; und
- Fig. 5a/b: zeigen weitere Detailansichten, welche den Einbau und den Aufbau des als Hülse ausgebildeten Gleitlager-Elementes veranschaulichen.

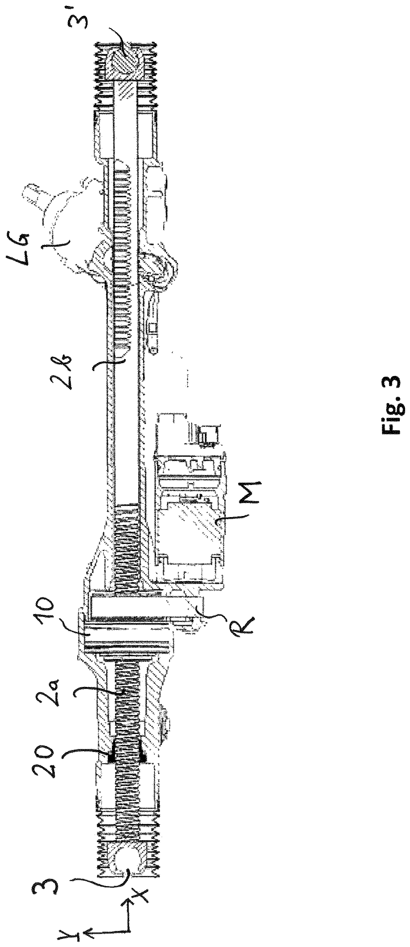

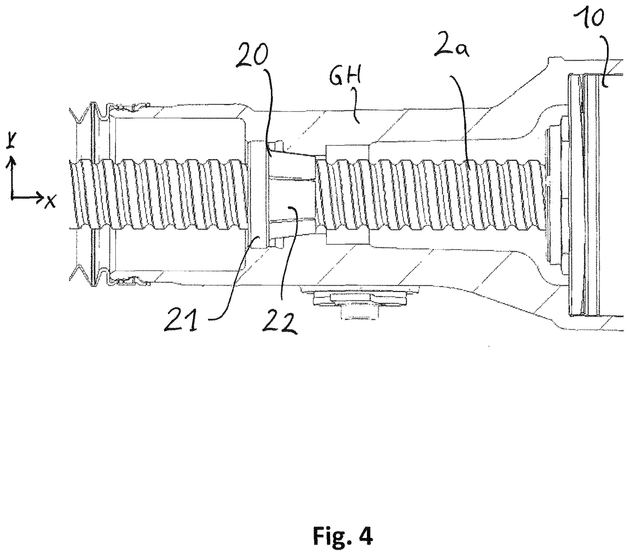

Die in den Fig. 3 und 4 dargestellten Kugelgewindetriebe weisen auch solche Komponenten auf, die bereits in den Fig. 1 und 2 vorhanden sind und mit Bezugszeichen versehen sind. Daher werden die Bezugszeichen für die folgenden Komponenten beibehalten: Lenkungs-Gehäuse GH mit Lenkgetriebe LG und Kugelgewindetrieb 10 im Gehäuse(teil) 1; Kugelmutter 5; Innenbereich bzw. Kugelumlauf mit Kugeln 6; Gewindespindel 2b mit ihrer Drehachse D; Festlager 4; Zahnstange 2b; Gelenk G zur Ankopplung der jeweiligen Spurstange 3 bzw. 3'; Riemen R und Motor M.

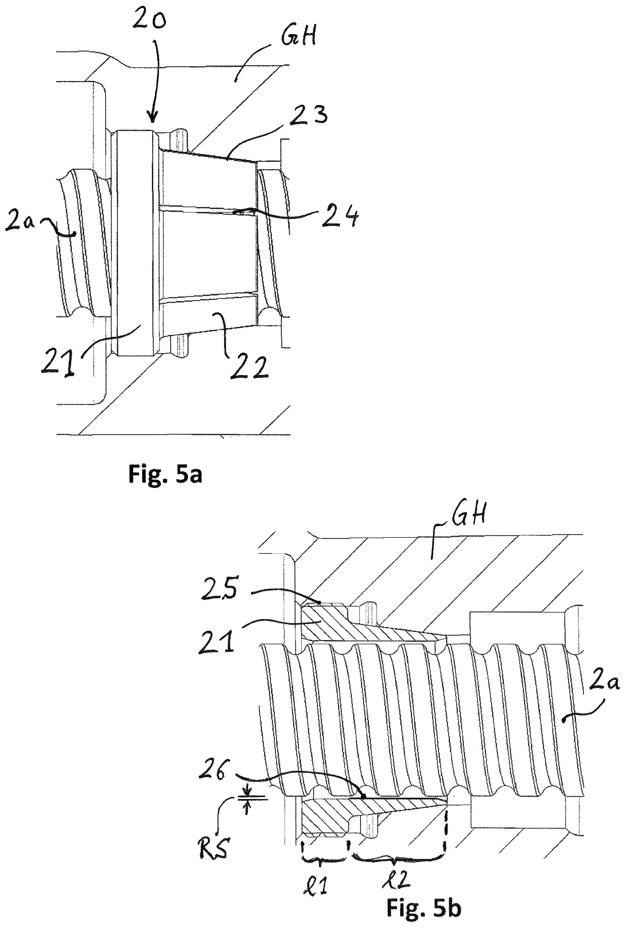

Nachfolgend wird zur Beschreibung des ersten Ausführungsbeispiels auf die Fig. 3 - 5a/b Bezug genommen:
Die Fig. 3 zeigt im Querschnitt den Aufbau einer Lenkung, die mit einem erfindungsgemäßen Kugelgewindetrieb 10 ausgestattet ist. Der Kugelgewindetrieb 10 umfasst die Gewindespindel 2a, welche baueinheitlich mit der Zahnstange 2b der Lenkung ausgebildet ist. Das Gesamtgebilde wird auch kurz vereinfachend mit Zahnstange bezeichnet. An beiden freien Enden des Gesamtgebildes ist eine Spurstange 3 bzw. 3' gelenkig angeschlossen. Um nun zu verhindern, dass hohe Querbelastungen, also hohe Querkräfte in Radialrichtung Y, den Kugelumlauf des Kugelgewindetrieb 10 überlasten, ist zwischen dem Kugelgewindetrieb 10 und dem freien Ende der Gewindespindel 2a, also dem mit der Spurstange 3 verbundenen Ende, ein Gleitlager-Element 20 angeordnet, das die Gewindespindel 2a radial gegenüber dem Gehäuse GH abstützt.

Wie die Figuren 4 und 5a/b näher im Detail zeigen, ist das Gleitlager-Element als Hülse oder Buchse 20 ausgebildet ist, welche die Gewindespindel 2a umschließt. Die Hülse 20 weist einen konisch geformten Abschnitt 22 aufweist, welcher an seinem Außenumfang in Axialrichtung x konisch geformt ist und an einer im Gehäuse GH konisch geformten Innenwandung 23 anliegt. Im dargestellten Beispiel verjüngt sich der Konus des Abschnitts 22 in Richtung X, d.h. zur Kugelmutter hin. Die Hülse 20 weist auch einen ringförmigen Abschnitt 21 auf, der mit einem Außengewinde 25 versehen ist, welches mit einem in dem Gehäuse GH ausgebildeten Innengewinde in Eingriff steht. Die Hülse 20 bzw. der Abschnitt 21 kann als Einstellschraube verstanden werden, welche durch Einschrauben in das Innengewinde des Gehäuses GH den konusförmigen Abschnitt 22 mehr oder weniger stark gegen die konusförmige Innenwandung des Gehäuses GH presst. Dadurch wird die Position des Konus bzw. seine Verstemmung definiert, wodurch wiederum bestimmt wird, ob und welches Radialspiel RS zwischen der glatten Innenwandung der Hülse 20 und der Gewindespindel 2a besteht.

Wir insbesondere die Figur 5a zeigt, ist der konisch geformte Abschnitt 22 mit mehreren in Axialrichtung x verlaufenden Schlitzen 24 versehen, wodurch dieser den Abschnitt 22 in mehrere Segmente unterteilt wird. Hierdurch wird eine gewünschte Elastizität der Hülse (Einstellschraube) 20 bestimmt. Auch die Materialauswahl, z.B. PA6-Kunststoff, und die Dimensionierung des konischen Abschnitts 22 bestimmen die Elastizität der Hülse mit.

Das insbesondere anhand der Fig. 5b veranschaulichte Radialspiel (RS) ist im Wege der Montage der Hülse (20) einstellbar, indem mittels des Außengewindes 25 die Position des konisch geformten Abschnitts 22 gegenüber der konisch geformten Innenwandung 23 auf das gewünschte Maß eingestellt wird. Je weiter der Konus sich gegen die konische Innenwandung des Gehäuses GH stemmt, desto enger wird das Radialspiel. Somit kann erreicht werden, dass immer ein Radialspiel vorhanden ist, wenn keine Querbelastung oder nur eine geringe Querbelastung auftritt. Dadurch bleibt die Funktion des Kugelgewindetriebs 10 zunächst unbeeinflusst; es besteht quasi ein Freilauf der Gewindespindel 2a innerhalb der Hülse 20.

Die Hülse bzw. Einstellschraube ist nun so eingestellt, dass die Gewindespindel 2a erst ab einer definierten Querbelastung radial gegenüber dem Gehäuse GH abstützt wird, also erst dann die Gewindespindel sich soweit verbiegt, dass die an der glatten Innenwandung 26 der Hülse anliegt. Beispielsweise kann die Position der Hülse bzw. der Grad der konischen Verstemmung so eingestellt sein, dass bei einer Querkraftkomponente (siehe "c" in Fig. 2) mindestens 10% der Spurstangenkraft (siehe "a") beträgt. Hierdurch soll das Radialspiel RS so eingestellt werden, dass erst ab dieser Größe die radiale Stützwirkung des Gleitlagers bzw. der Hülse 20 eintritt. Die Grenze kann auch beispielsweise auf mindestens 20% eingestellt werden, so dass die Stützwirkung erst bei besonders hohen Querbelastung einsetzt, die in Extremsituationen (Sonderereignisse, Missbrauch) auftreten.

Zur Einstellbarkeit gehört auch die Dimensionierung der Steigung des Konus. Es hat sich gezeigt, dass eine Steigung zwischen 1 und 1,5 hier besonders vorteilhaft ist. Die Gesamtlänge der Hülse 20 kann z.B. etwa 15 mm betragen. Was die Länge I1 des Schrauben-Abschnitts 21 und die Länge I2 des konischen Abschnitts 22 angeht (s. Fig. 5b), so ist I2 deutlich länger als I1; beispielsweise ist I2 mindestens 2-mal so lang wie I1.

Der Einbauort der Hülse 20 befindet sich vorzugsweise nahe dem freien Ende mit dem Anschlussgelenk für die Spurstange 3. Dadurch können an der Spurstange wirkende Querkraftkomponenten besser abgestützt / abgefangen werden. Die Hülse selbst besteht im vorliegenden Beispiel aus einem Polyamid vom Typ PA-6, kann aber auch aus anderen geeigneten Kunststoffen gefertigt sein, alternativ auch aus Metall, wie z.B. Stahl oder Aluminium.

Die Erfindung ist besonders geeignet, in der Lenkung eines Kraftfahrzeuges verbaut zu werden, insbesondere in einer Lenkung mit elektrischer Hilfskraftunterstützung. Durch die Erfindung sind leichtere Design- bzw. Konstruktionsvarianten realisierbar, da kleinere Gewindespindel oder Zahnstangen-Durchmesser möglich sind. Auch ist eine kürzere Bauweise der Kugelmutter möglich, da weniger Gewindegänge erforderlich sind. Die Performance bzw. Betriebseigenschaften werden durch eine nicht verspannte Kugelkette deutlich verbessert.

Zusammenfassend betrifft die Erfindung einen Kugelgewindetrieb 10, der in einer Lenkung eingesetzt wird. Der Kugelgewindetrieb 10 enthält eine Gewindespindel 2a zur Umsetzung eines von einem Elektromotor M erzeugten Hilfsdrehmomentes in eine translatorische Hilfskraft, die auf eine Zahnstange 2b in der Lenkung eines Kraftfahrzeugs wirkt, wobei ein Ende der Gewindespindel 2a und ein Ende der Zahnstange 2b jeweils mittels eines Axialgelenks G mit einer Spurstange 3 verbunden sind, wobei der Kugelgewindetrieb 10 eine mittels eines Festlagers 4 in einem Gehäuse GH gelagerte Kugelmutter 5 aufweist. Um hohe Querbelastungen bzw. Querkräfte, die von der/den Spurstangen 3, 3' kommen und in Radialrichtung y wirken, aushalten zu können, ist zwischen dem mit der einen Spurstange 3 verbundenen Ende der Gewindespindel 2a und dem Kugelgewindetrieb 10 ein Gleitlager-Element 20 angeordnet ist, welches die Gewindespindel 2a radial gegenüber dem Gehäuse GH abstützt. Die Abstützung erfolgt über ein einstellbares Radialspiel, wobei das Gleitlager-Element vorzugsweise als eine Hülse 20 ausgebildet ist, welche die Gewindespindel 2a umschließt, wobei die Hülse 20 einen konisch geformten Abschnitt 22 aufweist, der an seinem Außenumfang in Axialrichtung x konisch geformt ist und an einer im Gehäuse GH konisch geformten Innenwandung 23 anliegt.

### Bezugszeichenliste

- 10 :: Kugelgewindetrieb
- 1 :: Gehäuse der des Kugelgewindetriebs
- 2a :: Gewindespindel
- 2b :: Zahnstange
- 3, 3' :: Spurstange
- 4 :: Festlager
- 4A :: Außenring
- 5 :: Kugelmutter
- 6 :: Kugeln bzw. Kugelumlauf

- GH :: Gehäuse der Lenkung
- L :: Lenkgetriebe
- D :: Drehachse
- G :: Axialgelenk zur gelenkigen Verbindung der Spurstange mit der Gewindespindel bzw. Zahnstange
- a :: Spurstangen-Kraft (in die Komponenten b und c zerlegbar)
- b :: Axialkraftkomponente
- c :: Querkraftkomponente

- K :: Kippmoment
- x, y, z :: Raumachsen bzw. Richtungskoordinaten

- R :: Riemen
- M :: Elektromotor

- 20 :: Gleitlager in Form einer Einstellschraube als radiales Stützlager für die Gewindespindel
- 21 :: ringförmiger Abschnitt der Hülse mit Außengewinde
- 22 :: konusförmige Abschnitte / Segmente
- 23 :: konusförmige Innenwandung des Gehäuses GH
- 24 :: Schlitze
- 25 :: Außengewinde
- 26 :: Innenwandung der Hülse
- RS .: Radialspiel (einstellbar)

## Patentansprüche

1. Kugelgewindetrieb (10) mit einer Gewindespindel (2a) zur Umsetzung eines von einem Elektromotor (M) erzeugten Hilfsdrehmomentes in eine translatorische Hilfskraft, die auf eine Zahnstange (2b) in einer Lenkung eines Kraftfahrzeugs wirkt, wobei ein Ende der Gewindespindel (2a) und ein Ende der Zahnstange (2b) jeweils mittels eines Axialgelenks (G) mit einer Spurstange (3) verbunden sind, wobei der Kugelgewindetrieb (10) eine mittels eines Festlagers (4) in einem Gehäuse (GH) gelagerte Kugelmutter (5) aufweist, und wobei zwischen dem mit der Spurstange (3) verbundenen Ende der Gewindespindel (2a) und dem Kugelgewindetrieb (10) ein Gleitlager-Element (20) angeordnet ist, das die Gewindespindel (2a) radial gegenüber dem Gehäuse (GH) abstützt, **dadurch gekennzeichnet, dass** das Gleitlager-Element als eine Hülse (20) ausgebildet ist, die die Gewindespindel (2a) umschließt, wobei die Hülse (20) einen konisch geformten Abschnitt (22) aufweist, der an seinem Außenumfang in Axialrichtung (x) konisch geformt ist und an einer im Gehäuse (GH) konisch geformten Innenwandung (23) anliegt, dass die Hülse (20) einen ringförmigen Abschnitt (21) mit einem Außengewinde (25) aufweist, das mit einem in dem Gehäuse (GH) ausgebildeten Innengewinde in Eingriff steht, dass das als Hülse (20) ausgebildete Gleitlager-Element eine glatte Innenwandung (26) aufweist, an die der äußere Umfang der Gewindespindel (2a) mit einem einstellbaren Radialspiel (RS) anliegt, wobei das Radialspiel (RS) durch eine mittels des Außengewindes (25) eingestellte Position des konisch geformten Abschnitts (22) gegenüber der konisch geformten Innenwandung (23) einstellbar ist.

2. Kugelgewindetrieb (10) nach Anspruch 1, **dadurch gekennzeichnet,**
**dass** der konisch geformte Abschnitt (22) mehrere in Axialrichtung (x) verlaufende Schlitze (24) aufweist, die den Abschnitt (22) in mehrere Segmente unterteilen.

3. Kugelgewindetrieb (10) nach Anspruch 1, **dadurch gekennzeichnet, dass** das Radialspiel (RS) so eingestellt ist, dass das Gleitlager-Element, insbesondere die Hülse (20), die Gewindespindel (2a) erst ab einer definierten Querbelastung radial gegenüber dem Gehäuse (GH) abstützt, insbesondere ab einer Querbelastung, die auftrifft, wenn die Querkraftkomponente (c) größer als 10%, insbesondere als 20%, der Spurstangen-Kraft (a) beträgt.

4. Kugelgewindetrieb (10) nach Anspruch nach einem der Ansprüche 1-3, **dadurch gekennzeichnet, dass** der konisch geformte Abschnitt (22) eine Steigung zwischen 1 und 1,5 aufweist.

5. Kugelgewindetrieb (10) nach einem der vorhergehenden Ansprüche, **dadurch gekennzeichnet, dass** das Gleitlager-Element, insbesondere die Hülse (20), aus Metall, insbesondere Stahl oder Aluminium, oder aus Kunststoff, insbesondere einem Polyamid, gefertigt ist.

6. Lenkung für ein Kraftfahrzeug, insbesondere Lenkung mit elektrischer Hilfskraftunterstützung, **dadurch gekennzeichnet, dass** sie den Kugelgewindetrieb (10) nach einem der vorhergehenden Ansprüche aufweist.

## Claims

1. Ball screw drive (10) having a threaded spindle (2a) for converting an assistance torque generated by an electric motor (M) into a translational assistance force which acts on a toothed rack (2b) in a steering system of a motor vehicle, wherein one end of the threaded spindle (2a) and one end of the toothed rack (2b) are connected in each case by means of an axial joint (G) to a track rod (3), wherein the ball screw drive (10) has a ball nut (5) which is mounted in a housing (GH) by means of a fixed bearing (4), and wherein a plain bearing element (20) is arranged between that end of the threaded spindle (2a) which is connected to the track rod (3) and the ball screw drive (10), which plain bearing element supports the threaded spindle (2a) radially with respect to the housing (GH), **characterized in that** the plain bearing element is formed as a sleeve (20) which surrounds the threaded spindle (2a), wherein the sleeve (20) has a conically shaped section (22) which is of conical shape in an axial direction (x) at its outer circumference and which bears against a conically shaped inner wall (23) in the housing (GH), **in that** the sleeve (20) has a ring-shaped section (21) with an external thread (25) which engages with an internal thread formed in the housing (GH), **in that** the plain bearing element formed as a sleeve (20) has a smooth inner wall (26) against which the outer circumference of the threaded spindle (2a) bears with a settable radial play (RS), wherein the radial play (RS) is settable by means of a position, set by means of the external thread (25), of the conically shaped section (22) relative to the conically shaped inner wall (23).

2. Ball screw drive (10) according to Claim 1, **characterized in that** the conically shaped section (22) has multiple slots (24) which run in the axial direction (x) and which divide the section (22) into multiple segments.

3. Ball screw drive (10) according to Claim 1, **characterized in that** the radial play (RS) is set such that the plain bearing element, in particular the sleeve (20), supports the threaded spindle (2a) radially with respect to the housing (GH) only in the event of an exceedance of a defined transverse load, in particular in the event of an exceedance of a transverse load that arises when the transverse force component (c) amounts to more than 10%, in particular more than 20%, of the track rod force (a).

4. Ball screw drive (10) according to claim according to one of Claims 1 to 3, **characterized in that** the conically shaped section (22) has a gradient of between 1 and 1.5.

5. Ball screw drive (10) according to one of the preceding claims, **characterized in that** the plain bearing element, in particular the sleeve (20), is manufactured from metal, in particular steel or aluminum, or from plastic, in particular a polyamide.

6. Steering system for a motor vehicle, in particular steering system with electrical power steering assistance, **characterized in that** said steering system has the ball screw drive (10) according to one of the preceding claims.

## Revendications

1. Système de vis et écrou à billes (10) comprenant une broche filetée (2a) pour convertir un couple auxiliaire généré par un moteur électrique (M) en une force de translation auxiliaire qui agit sur une crémaillère (2b) dans une direction d'un véhicule automobile, une extrémité de la broche filetée (2a) et une extrémité de la crémaillère (2b) étant à chaque fois connectées au moyen d'une articulation axiale (G) à une barre de liaison (3), le système de vis et écrou à billes (10) présentant un écrou à billes (5) supporté dans un boîtier (GH) au moyen d'un palier fixe (4) et un élément de palier lisse (20) étant disposé entre l'extrémité de la broche filetée (2a) connectée à la barre de liaison (3) et le système de vis et écrou à billes (10), lequel supporte la broche filetée (2a) radialement par rapport au boîtier (GH), **caractérisé en ce que** l'élément de palier lisse est réalisé sous forme de manchon (20) qui entoure la broche filetée (2a), le manchon (20) présentant une portion de forme conique (22) qui présente une forme conique au niveau de sa périphérie extérieure dans la direction axiale (x) et qui s'applique contre une paroi interne (23) de forme conique dans le boîtier (GH), **en ce que** le manchon (20) présente une portion annulaire (21) avec un filetage extérieur (25), qui est en prise avec un filetage intérieur réalisé dans le boîtier (GH), **en ce que** l'élément de palier lisse réalisé en tant que manchon (20) présente une paroi interne lisse (26) contre laquelle s'applique la périphérie extérieure de la broche filetée (2a) avec un jeu radial ajustable (RS), le jeu radial (RS) pouvant être ajusté par une position ajustée au moyen du filetage extérieur (25) de la portion de forme conique (22) par rapport à la paroi interne de forme conique (23).

2. Système de vis et écrou à billes (10) selon la revendication 1, **caractérisé en ce que** la portion de forme conique (22) présente plusieurs fentes (24) s'étendant dans la direction axiale (x), qui divisent la portion (22) en plusieurs segments.

3. Système de vis et écrou à billes (10) selon la revendication 1, **caractérisé en ce que** le jeu radial (RS) est ajusté de telle sorte que l'élément de palier lisse, en particulier le manchon (20), supporte la broche filetée (2a) radialement par rapport au boîtier (GH) seulement à partir d'une sollicitation transversale définie, en particulier à partir d'une sollicitation transversale qui se produit lorsque la composante de force transversale (c) est supérieure à 10 %, en particulier supérieure à 20 %, de la force de la barre de liaison (a).

4. Système de vis et écrou à billes (10) selon la revendication selon l'une quelconque des revendications 1 à 3, **caractérisé en ce que** la portion de forme conique (22) présente un pas compris entre 1 et 1,5.

5. Système de vis et écrou à billes (10) selon l'une quelconque des revendications précédentes, **caractérisé en ce que** l'élément de palier lisse, en particulier le manchon (20), est fabriqué en métal, en particulier en acier ou en aluminium, ou en plastique, en particulier en polyamide.

6. Direction pour un véhicule automobile, en particulier direction avec assistance électrique, **caractérisée en ce qu'**elle présente le système de vis et écrou à billes (10) selon l'une quelconque des revendications précédentes.
